(19) **Europäisches Patentamt / European Patent Office / Office européen des brevets**

(11) **EP 1 472 701 B1**

(12) **FASCICULE DE BREVET EUROPEEN**

(45) Date de publication et mention de la délivrance du brevet:
**11.08.2010 Bulletin 2010/32**

(21) Numéro de dépôt: **03717377.0**

(22) Date de dépôt: **06.02.2003**

(51) Int Cl.:
*G21C 17/06* *(2006.01)*

(86) Numéro de dépôt international:
**PCT/FR2003/000375**

(87) Numéro de publication internationale:
**WO 2003/067607 (14.08.2003 Gazette 2003/33)**

(54) **PROCÉDÉ DE CONTRÔLE DE CRAYON DE COMBUSTIBLE NUCLÉAIRE**

VERFAHREN ZUM PRÜFEN EINES KERNBRENNSTABES

METHOD FOR TESTING A NUCLEAR FUEL ROD

(84) Etats contractants désignés:
**BE DE GB**

(30) Priorité: **08.02.2002 FR 0201557**

(43) Date de publication de la demande:
**03.11.2004 Bulletin 2004/45**

(73) Titulaire: **AREVA NC**
**75009 Paris (FR)**

(72) Inventeurs:
• **Roche, Claude**
  **30150 Roquemaure (FR)**
• **Pavanello, Fabrice**
  **30126 St Laurent des Arbres (FR)**

(74) Mandataire: **Poulin, Gérard et al**
**Brevalex**
**3, rue du Docteur Lancereaux**
**75008 Paris (FR)**

(56) Documents cités:
**US-A- 4 564 498**

**Description**

Cette invention a pour sujet un procédé de contrôle de crayon de combustible nucléaire.

Certains crayons de combustible nucléaire comprennent une gaine renfermant un empilement de pastilles de combustible et fermée à une extrémité ouverte par un bouchon qui est ensuite soudé. Un ressort est comprimé entre le bouchon et l'empilement de pastilles pour maintenir celui-ci en place.

Des contrôles non destructifs sont menés pour vérifier certains caractères du crayon assemblé. C'est ainsi qu'un détecteur électromagnétique est utilisé pour vérifier la présence du ressort et la longueur de la chambre qui le contient entre le bouchon et les pastilles de combustible. On fait défiler le crayon devant le détecteur, et le signal de sortie du détecteur, d'autant plus fort que le couplage magnétique est localement plus important, présente un plateau correspondant à la longueur du ressort et limité par deux pics correspondant aux extrémités du ressort, où les spires comprimées s'accumulent et le couplage magnétique est donc plus grand. L'apparition de cette courbe caractéristique prouve que le ressort n'a pas été oublié.

Le procédé dont il est question ici utilise une mesure de ce genre pour déterminer, d'après un raisonnement inédit, la qualité de la soudure du bouchon.

Il a en effet été constaté que la qualité de la soudure dépendait fortement de l'énergie apportée. Si elle est excessive, des gouttelettes de métal fondu peuvent se déposer sur le ressort et affecter son état ou le coller au bouchon. On doit particulièrement redouter la modification de la structure métallurgique du ressort, de la gaine et du bouchon par un échauffement excessif. Un crayon dont le ressort est endommagé doit être rejeté tout comme un crayon au ressort absent.

Les documents US-A- 4 564 498 et US- 4 663 112 décrivent des procédés de contrôle de crayons de combustible nucléaire, où des capteurs analogues à ceux de l'invention sont utilisés pour distinguer différentes compositions du combustible grâce au signal de couplage magnétique obtenu. Le premier d'entre eux divulgue encore un signal à deux pics encadrant un plateau quand le détecteur passe devant le ressort au bout du crayon, mais aucun usage n'est fait de cette partie du signal hormis une calibration de gain, et il n'est pas indiqué que des variations de niveau des pics pourraient provenir d'un défaut de soudure.

Pour résumer, l'invention est relative à un procédé de contrôle d'un crayon de combustible nucléaire conforme à la revendication.

L'invention sera maintenant décrite en liaison aux figures suivantes :

- la figure 1 est une vue générale de l'appareillage utilisé pour la mise en oeuvre du procédé,
- la figure 2 illustre la courbe obtenue.

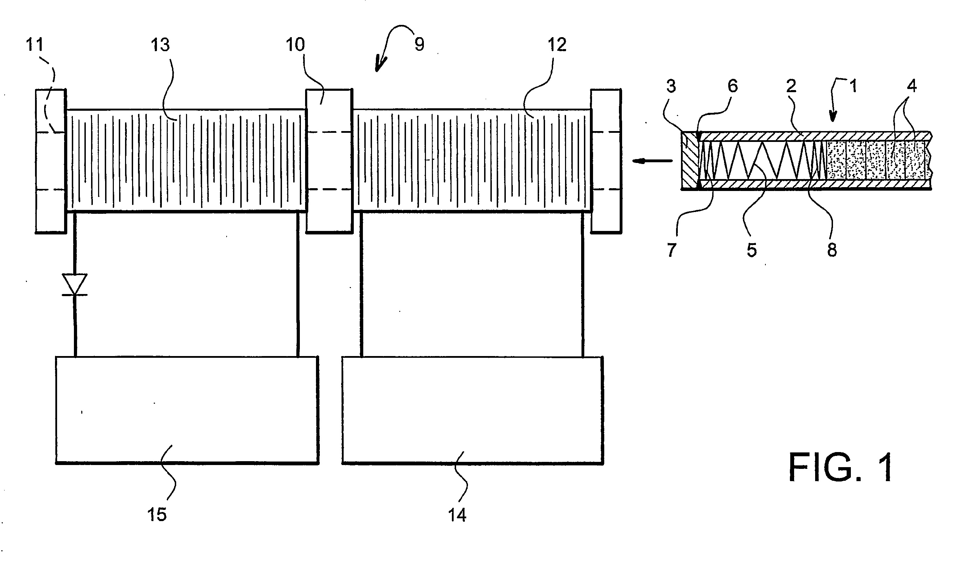

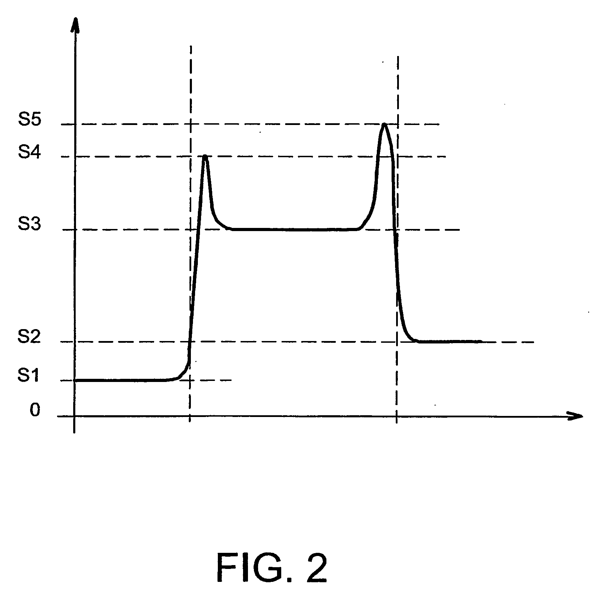

Se reportant à la figure 1, il se trouve représenté un crayon 1 de combustible nucléaire dont la gaine porte la référence 2, le bouchon supérieur la référence 3, les pastilles empilées la référence 4, et le ressort la référence 5. La soudure du bouchon 3 au bord de la gaine 1 porte la référence 6. Elle s'étend au droit d'une extrémité 7 du ressort 5, dont l'autre extrémité, adjacente aux pastilles 4, porte la référence 8. Le contrôle se fait par un capteur 9 comprenant un mandrin 10 cylindrique évidé d'un trou 11 pour le passage des crayons 1 et creusé de deux gorges extérieures successives dont l'une reçoit un bobinage primaire 12 et l'autre un bobinage secondaire 13. Un dispositif d'excitation 14 est placé aux bornes du bobinage 12 et un dispositif de réception 15 aux bornes du bobinage 13. Chacun des bobinages 12 et 13 peut comprendre 530 spires de fils de cuivre d'un dixième de millimètre de diamètre. Le bobinage primaire 12 est attaqué par un signal électrique sinusoïdal provenant d'un oscillateur ; sa fréquence peut être de 1,5 kilohertz et sa tension de 2 volts. Le bobinage secondaire 13 est parcouru par un courant induit dont la tension dépend du couplage magnétique produit par le crayon 1. En effet, le crayon 1 est déplacé le long du détecteur 9 en passant par l'évidement 11, en donnant un signal de forme complexe qu'on illustre à la figure 2. Les abscisses expriment une longueur de défilement et les ordonnées une tension mesurée par le bobinage secondaire 13. Tout d'abord on enregistre une valeur constante ou de base correspondant à une absence d'influence magnétique du crayon 1, ou à un essai à vide, et dont la valeur S1 est de 2,6 volts environ dans l'exemple présent. La valeur du signal s'accroît subitement quand le couplage magnétique produit principalement par l'extrémité 7 du ressort 5 se fait sentir, jusqu'à une valeur de pic S4 comprise entre environ 4,0 et 4,5 volts dans cet exemple. Ensuite, le couplage magnétique est produit principalement par la portion centrale du ressort 5, de sorte que le signal prend une valeur de plateau S3 plus faible, d'environ 3,3 ou 3,4 volts. Quand le couplage magnétique est produit principalement par l'autre extrémité 8 du ressort 5, le signal revient sensiblement à une valeur élevée de pic S5 qui est en pratique proche de S4, ou parfois un peu plus élevée. Enfin, si on continue de promener le crayon 1 à travers le détecteur 9, le signal prend une valeur stable S2, le couplage étant produit essentiellement par la gaine 2, et dont la valeur est un peu .supérieure à S1.

Le procédé conforme à l'invention consiste à relever les valeurs S4, S5 et S3 et à faire le rapport $\dfrac{(S4 - S5)}{S3}$. Il a été en effet constaté que si un excès d'énergie était utilisé pour souder le bouchon 3, la valeur de S4 était amoindrie. Le procédé de contrôle consiste donc à comparer la valeur du rapport $\dfrac{(S4 - S5)}{S3}$ à un seuil, qui peut être de -10% dans l'exemple considéré mais doit être déterminé empiriquement dans d'autres, et de juger que les crayons 1 sont conformes aux exigences de fabrication si ce rapport est supérieur ou inférieur au seuil (dans l'exemple, inférieur au seuil). Cette courbe permet aussi de déterminer la longueur comprimée du ressort 5 ou de la chambre qui le contient, en mesurant la distance entre les deux pics, et la présence même du ressort 5, car aucun pic n'est observé s'il est absent et la courbe de mesure passe de la valeur S1 à la valeur S2 directement.

Le choix du rapport $\dfrac{(S4-S5)}{S3}$ comme critère d'acceptation se fonde sur ce que les valeurs des pics S4 et S5 ne dépendent pas seulement du couplage magnétique du crayon 1 à l'endroit sensible aux défauts de fabrication, mais aussi de caractéristiques de l'environnement, de la longueur de ressort et du détecteur lui-même. Il est donc plus sûr de pondérer ces valeurs S4 et S5 par la valeur plateau S3 qui offre une sorte de signal de référence.

## Revendications

1. Procédé de contrôle d'un crayon (1) de combustible nucléaire comprenant un bouchon extrême (3) soudé à une gaine (2) et un ressort (5) à spires comprimé entre le bouchon (3) et le combustible (4), par un détecteur (9) à induction électromagnétique devant lequel le crayon est déplacé, comprenant des mesures d'un signal de sortie du détecteur d'autant plus fort qu'un couplage magnétique local entre le détecteur et le crayon est plus important, consistant à relever sur le signal une valeur (53) d'une portion en plateau (S3), produite par une portion centrale du ressort, et deux valeurs (S4 et S5) des pics, les pics étant adjacents à la portion en plateau et produits par des extrémités opposées du ressort, **caractérisé en ce qu'**un rapport $\dfrac{(S4-S5)}{S3}$ de valeurs du signal est calculé et **en ce que** le crayon est accepté ou rejeté selon que le rapport est supérieur ou inférieur à un seuil.

## Claims

1. Method for the inspection of a nuclear fuel rod (1) with an end plug (3) welded to a cladding (2), a coil spring (5) being compressed between the plug (3) and the fuel (4), using an electromagnetic induction detector (9) along which the rod is moved, by measuring a detector output signal, the method consisting in recording a value of the signal at a plateau portion (S3), obtained with non-adjacent spring coils, and other values of the signal at peaks (S4 and S5) adjacent to the plateau portion, and which apply maximum magnetic coupling, **characterised in that** a ratio $\dfrac{(S4-S5)}{S3}$ of the values of the signal is computed, and **in that** the rod is accepted or rejected depending on whether the ratio is more than or less than a threshold.

## Patentansprüche

1. Verfahren zum Kontrollieren eines Kernbrennstabs (1), der einen Endverschluss (3), der an eine Hülle (2) geschweißt ist, und eine Spiralfeder (5) umfasst, die zwischen dem Verschluss (3) und dem Brennmaterial (4) komprimiert ist, durch einen auf elektromagnetischer Induktion basierenden Detektor (9), vor dem der Stab verlagert wird, umfassend Messungen eines Ausgangssignals des Detektors, das um so stärker ist, je bedeutender eine magnetische lokale Kopplung zwischen dem Detektor und dem Stab ist, wobei es darin besteht, aus dem Signal einen Wert (53) eines Plateau-Abschnitts (S3), der durch einen zentralen Abschnitt der Feder erzeugt wird, und zwei Spitzenwerte (S4 und S5) zu erheben, wobei die Spitzen dem Plateau-Abschnitt benachbart sind und von gegenüberliegenden Enden der Feder erzeugt werden, **dadurch gekennzeichnet, dass** ein Verhältnis (S4 - S5)/S3 von Werten des Signals berechnet wird und dass der Stab akzeptiert oder zurückgewiesen wird in Abhängigkeit davon, ob das Verhältnis größer oder kleiner als ein Schwellenwert ist.

FIG. 1

EP 1 472 701 B1

FIG. 2

## RÉFÉRENCES CITÉES DANS LA DESCRIPTION

**Documents brevets cités dans la description**

- US 4564498 A

- US 4663112 A